# EUROPEAN PATENT APPLICATION

(11) **EP 3 524 931 A1**
(43) Date of publication of application: **14.08.2019**
(21) Application number: 17875226.7
(22) Date of filing: 20.06.2017
(51) Int. Cl.: G01C 15/02

(54) **METHOD FOR VERIFYING ACCURACY OF RTK TILT COMPENSATION MEASUREMENT**

(30) Priority: 02.12.2016 CN 201611097416
(71) Applicant: Shanghai Huace Navigation Technology Ltd., Shanghai 201702 (CN)
(72) Inventor: LI, Pengfei, Shanghai 201799 (CN); WANG, Qingliang, Shanghai 201799 (CN); ZHAO, Yaoyao, Shanghai 201799 (CN); WANG, Xuan, Shanghai 201799 (CN); HE, Wei, Shanghai 201799 (CN)
(74) Representative: Inal, Aysegul Seda
(86) International application number: PCT/CN2017/089128
(87) International publication number: WO 2018/099051

(57) **Abstract**

A method for verifying accuracy of RTK tilt compensation measurement is provided by the present invention. By firstly collecting the central coordinates and subsequently collecting the compensation measurement points, the offset and the height difference of the measurement points are calculated in real time, recorded and displayed. The maximum and minimum errors of the compensation measurement points near a point location are automatically counted, and whether an accuracy of the tilt compensation measurement of the RTK equipment meets the designed requirement of accuracy is verified. Therefore, the requirements for the operators are minimized. The method of the present invention can be used to detect the accuracy of the tilt compensation measurement of the RTK equipment.

## Description

### Technical Field

The present invention relates to the technical field of surveying and mapping, and particularly to a method for verifying accuracy of RTK tilt compensation measurement.

### Background

With the rapid development of satellite positioning technology, the demand for fast and high-accuracy position information is also increasing. The most widely used high-accuracy positioning technology at present is RTK (Real-Time Kinematic Positioning). The key point of the RTK technology is to use the GPS carrier phase observations and the spatial correlation of errors in observations between reference stations and mobile stations. Most of the errors in the observation data of the mobile station are removed in differential manner, so that a high-accuracy (decimeter-level or even centimeter-level) positioning can be realized. In the RTK work mode, the base station transmits the observed values and coordinate information of the observation station to a rover via data links. The rover not only receives data from the base station through the data links, but also collects GPS observation data, forms differential observation values in the system for real-time processing, and gives centimeter-level positioning results. The whole process takes less than one second. The rover is directly powered on under dynamic conditions, and completes the search and solving of the whole-cycle ambiguity in a dynamic environment. After the whole-cycle unknown number is unfixed, a real-time processing of each epoch can be performed. As long as the tracking of the phase observation values of more than four satellites and the necessary geometric figure can be maintained, the rover can provide the centimeter-level positioning results at any time. The RTK (Real-Time Kinematic Positioning) adopts the carrier phase dynamic real-time differential method, so the positioning accuracy of the measuring point can be centimeter-level, which is a major milestone of GPS applications. The RTK brings light to the fields of engineering setting-out, topographic mapping, and various control surveys, and greatly improves efficiency of fieldwork.

However, for a single person operation, the RTK requires to keep the equipment as flat as possible, and avoid shaking. and the levelling bubble should be strictly centered during the measurement process. It is easy to cause gross errors in the RTK measurement if the surveyor does not hold the centering rod well or shakes the equipment during the measurement process. The gross error results are uncontrollable, and the conventional RTK measurement method cannot effectively remove the gross errors.

In order to make the RTK equipment capable of performing high-accuracy measurement in fields with harsh environment, and to minimize the impact of human operations on the measurement accuracy of RTK, a tilt compensation measurement mode was developed in response to the demands. At present, the world's mainstream RTK equipment produced by companies, such as foreign companies: GEO, Leica, Topcon, and Chinese companies: HUACE, The South Group of Surveying and Mapping, Hi-Target, is also gradually equipped with the function of tilt compensation. However, currently, there is no well-developed method to more effectively determine the accuracy of the tilt compensation measurement to allow the surveyor to determine whether it is measurable in real time, the result is usually obtained by data analysis after the data measurement.

### Summary

The present method attempts to provide a truly credible indicator for the accuracy of RTK tilt compensation measurement through some designed measurement methods, on-site measurement data, measurement data calculation and analysis. The tilt measurement errors can be displayed on a software and recorded in a database in real time.

The technical solution of the present invention is as follows.
1. A method for verifying an accuracy of an RTK tilt compensation measurement, characterized in that the method includes the following steps:
   providing RTK equipment with an electronic bubble and electronic compass compensation module and calibrating the electronic bubble and electronic compass compensation module to make electronic bubbles of a centering rod of the RTK equipment normally and reliably displayed;
   setting a control-point A and obtaining coordinate X0, Y0, H0 of the point A;
   centering on point A, placing a tip of the centering rod at the point A with a tilt angle α, and measuring N tilt compensation measurement points in each of the eight directions, namely, east, west, south, north, southeast, northeast, southwest, and northwest of the coordinate of the point A;
   continuously performing an inclination with the tilt angle α for N times, and after each inclination of the tilt angle α, measuring the tilt compensation measurement points in the eight directions i.e. east, west, south, north, southeast, northeast, southwest, and northwest of the coordinate of the point A, and recording a coordinate as Xn, Yn, Hn;
   calculating an error of the tilt compensation measurement to obtain a horizontal error ΔS and a height error ΔH;
   wherein, when the tilt compensation measurement is performed on a position of the point A, after an RTK measurement software acquires a coordinate of a current position, the horizontal error ΔS and the height error ΔH that change in real-time are displayed on an interface of the RTK measurement software; the RTK collects the compensation points while the ΔS and ΔH are calculated and recorded synchronously by a back end;
   when a measurement report is exported, for a section of the tilt compensation measurement in the measurement report, the RTK measurement software synchronously exports the horizontal error ΔS and the height error ΔH, while a maximum horizontal error ΔSmax and a minimum horizontal error ΔSmin of the RTK in the tilt compensation measurement are calculated, simultaneously;
   solving a horizontal error mean ∑ΔS and a height error mean ∑ΔH;
   exporting the data and performing a dispersion analysis to output an error statistical diagram.

According to the above-mentioned method for verifying accuracy of RTK tilt compensation measurement, wherein in the step S2, the control point A is set at an open and unobstructed outdoor position.

According to the above-mentioned method for verifying accuracy of RTK tilt compensation measurement, wherein in the step S2, the coordinate X0, Y0, H0 of the point A is obtained by calculating an average value of multiple measurements.

According to the above-mentioned method for verifying accuracy of RTK tilt compensation measurement, wherein the angle α is 5°.

According to the above-mentioned method for verifying accuracy of RTK tilt compensation measurement, wherein formulas for calculating the errors of the tilt compensation measurement is:
horizontal error ΔS = ;
height error ΔH=H0-Hn.

The present invention provides a practical and feasible method for verifying the accuracy of the tilt compensation measurement of the RTK equipment. By firstly collecting the central coordinates and subsequently collecting the compensation measurement points, the offset and height difference of the measurement points are calculated in real time, recorded and displayed. The maximum and minimum errors of the compensation measurement points near a point location are automatically counted, and whether an accuracy of the tilt compensation measurement of the RTK equipment meets the designed requirement of accuracy is verified. Therefore, the requirements for the operators are minimized. The method of the present invention can be used to detect the accuracy of the tilt compensation measurement of the RTK equipment. Also, the method of the present invention can be built in a measurement software to determine whether the user's tilt compensation measurement data is usable in real time, so it provides a useful method for using the RTK tilt compensation measurement method better.

### Brief Description of the Drawings

By reading the detailed descriptions of the non-limiting embodiments with reference to the drawings below, the present invention and features, appearance, advantages thereof will become clearer. The identical reference numerals throughout the drawings are used to indicate the same parts. The drawings were not drawn according to specific proportions, and the emphasis is on the substance of the present invention.
Fig. 1 is a statistical diagram of horizontal errors according to one embodiment of the present invention.
Fig. 2 is a statistical diagram of height errors according to one embodiment of the present invention.

### Detailed Description of the Embodiments

In the following descriptions, numerous specific details are given for a complete understanding of the present invention. However, it is apparent to those skilled in the art that the present invention may be implemented without one or more of these details. In other examples, in order to avoid confusion with the present invention, some technical features known in the art are not described.

For a complete understanding of the present invention, detailed steps and detailed structures will be provided in the following descriptions in order to clearly illustrate the technical solution of the present invention. A preferred embodiment of the present invention is described in detail hereinafter. However, besides these detailed descriptions, the present invention may have other implementations.

The present invention provides a method for verifying an accuracy of a RTK tilt compensation measurement, which includes the following steps.

First, the preparation of the accuracy verification equipment for the RTK tilt compensation measurement and the preparation of the site are carried out. Namely, the RTK equipment with an electronic bubble and electronic compass compensation module is provided. The electronic bubble and electronic compass compensation module is accuratly calibrated according to the equipment calibration requirements and the centering rod of RTK is calibrated to make the electronic bubbles of the centering rod of RTK equipment normally and reliably displayed.

A control-point A is set at an open and unobstructed outdoor position. The coordinate X0, Y0, H0 of point A is obtained by calculating an average value of multiple measurements.

By using the point A as the center, the tip of the centering rod is placed at the point A with a tilt angle α. The tilt compensation measurement points are measured in eight directions, namely, east, west, south, north, southeast, northeast, southwest, and northwest of the coordinate of the point A. When measuring the points, the measurement points are successively named in a certain naming manner. Optionally, the tilt angle α is 5°.

An inclination with the tilt angle α is continuously performed for N times. After each inclination of the tilt angle α, the tilt compensation measurement points in the eight directions i.e. east, west, south, north, southeast, northeast, southwest, and northwest of the coordinate of the point A are measured, and the coordinate is recorded as Xn, Yn, Hn. For example, for the first measurement, the tip of the centering rod is placed at the point A, after tilted for an angle of 5°, the tilt compensation measurement points in eight directions i.e. east, west, south, north, southeast, northeast, southwest, and northwest of the coordinate of point A are measured. Subsequently, tilting for the angle of 5° again (i.e. tilting for an angle of 10° based on the initial place), then the tilt compensation measurement points in eight directions i.e. east, west, south, north, southeast, northeast, southwest, and northwest of the coordinate of the point A are measured.

In an alternative embodiment, the tilt compensation measurement points are named according to the following manners.

| Tilt Angle | Offset Direction | Prefix of Point Name | Example of Point Name |
|---|---|---|---|
| 5° | east | E-5- | E-5-1, E-5-2, etc. |
| 5° | west | W-5- | W-5-1, W-5-2, etc. |
| 5° | south | S-5- | S-5-1, S-5-2, etc. |
| 5° | north | N-5- | N-5-2, N-5-2, etc. |
| 5° | southeast | ES-5- | ES-5-1, ES-5-2, etc. |
| 5° | northeast | EN-5- | EN-5-1, EN-5-2, etc. |
| 5° | southwest | WS-5- | WS-5-1, WS-5-2, etc. |
| 5° | northwest | WN-5- | WN-5-1, WN-5-2, etc. |

| Tilt Angle | Offset Direction | Prefix of Point Name | Example of Point Name |
|---|---|---|---|
| 10° | east | E-5- | E-10-1, E-10-2, etc. |
| 10° | west | W-5- | W-10-1, W-10-2, etc. |
| 10° | south | S-5- | S-10-1, S-10-2, etc. |
| 10° | north | N-5- | N-10-2, N-10-2, etc. |
| 10° | southeast | ES-5- | ES-10-1, ES-10-2, etc. |
| 10° | northeast | EN-5- | EN-10-1, EN-10-2, etc. |
| 10° | southwest | WS-5- | WS-10-1, WS-10-2, etc. |
| 10° | northwest | WN-5- | WN-10-1, WN-10-2, etc. |

Hereafter, the tilt data of the tilt angles of 15°, 20°, 25°, 30° were successively measured. The coordinate of each point is recorded as Xn, Yn, Hn.

The errors of the tilt compensation measurement are calculated to obtain the horizontal error ΔS and the height error ΔH. Optionally, the formula for calculating the error of the tilt compensation measurement of the point E-5-1 is as follows:
horizontal error ΔS = ; height error ΔH=H0-Hn.

When the tilt compensation measurement is performed on the position of the point A, and after the RTK measurement software acquires a coordinate of a current position, the horizontal error ΔS and the height error ΔH that change in real-time are displayed on the interface of the RTK measurement software. The RTK collects compensation points while the back end calculates and records the ΔS and ΔH, synchronously.

When the measurement report is exported, for a section of the tilt compensation measurement in the measurement report, the RTK measurement software synchronously exports the horizontal error ΔS and the height error ΔH, while the maximum horizontal error Δ Smax and the minimum horizontal error ΔSmin of the RTK in the tilt compensation measurement are calculated, simultaneously. It should be noted that a significant gross error of the maximum height error ΔHmax and the minimum height error ΔHmin caused by the flying point or accuracy change should be removed.

The horizontal error mean ∑ΔS and the height error mean ∑ΔH are calculated. The horizontal error mean ∑ΔS and the height error mean ∑ΔH, which indicate the accuracy of the tilt compensation measurements of this set of RTK should also be less than 5 CM.

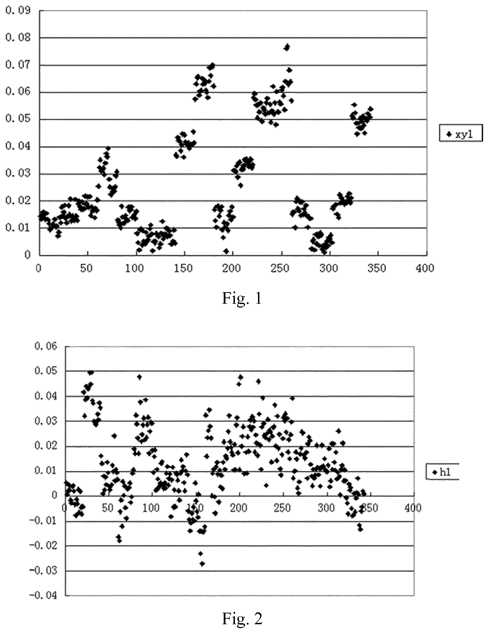

The data is exported and the dispersion analysis is performed to output the error statistical diagram shown in Fig.1 and Fig.2. Fig. 1 is a statistical diagram of the horizontal errors, and Fig. 2 is a statistical diagram of the height errors. By generating an error distribution diagram, a useful method for using the RTK tilt compensation measurement method in a better way is provided.

In conclusion, the present invention provides a practical and feasible method for verifying the accuracy of the tilt compensation measurement of the RTK equipment. By firstly collecting the central coordinates and subsequently collecting the compensation measurement points, the offset and height difference of the measurement points are calculated in real time, recorded and displayed. The maximum and minimum errors of the compensation measurement points near a point location are automatically counted, and whether an accuracy of the tilt compensation measurement of the RTK equipment meets the designed requirement of accuracy is verified. Therefore, the requirements for the operators are minimized. The method of the present invention can be used to detect the accuracy of the tilt compensation measurement of the RTK equipment. Also, the method of the present invention can be built in a measurement software to determine whether the user's tilt compensation measurement data is usable in real time, so it provides a useful method for using the RTK tilt compensation measurement method better.

The preferred embodiment of the present invention has been described above. It should be understood that the present invention is not limited to the specific embodiments described above. Devices and structures that are not described in detail herein should be understood as being implemented in a common manner known in the art. Various possible changes and modifications or equivalent embodiments obtained by equivalent substitutions may be derived from the technical solution of the present invention according to the method and technical features recited above without departing from the technical solution of the present invention by any skilled person in the art, which do not have any impact on the essence of the present invention. Therefore, any simple modification, equivalent substitution and modification made based upon the above embodiment according to the technical essence of the present invention without departing from the content of the technical solution of the present invention should still be considered as falling within the scope of the technical solution of the present invention.

## Claims

1. A method for verifying an accuracy of a RTK tilt compensation measurement, **characterized in that** the method comprises the following steps:
providing RTK equipment with an electronic bubble and electronic compass compensation module and calibrating the electronic bubble and electronic compass compensation module to make electronic bubbles of a centering rod of the RTK equipment normally and reliably displayed;
setting a control point A and obtaining a coordinate X0, Y0, H0 of the point A;
centering on point A, placing a tip of the centering rod at the point A with a tilt angle α, and measuring N tilt compensation measurement points in each of the eight directions, wherein the eight directions are east, west, south, north, southeast, northeast, southwest, and northwest of the coordinate of the point A;
continuously performing an inclination with the tilt angle α for N times, and after each inclination of the tilt angle α, measuring the tilt compensation measurement points at the eight directions of east, west, south, north, southeast, northeast, southwest, and northwest of the coordinate of the point A, and recording a coordinate as Xn, Yn, Hn;
calculating an error of the tilt compensation measurement to obtain a horizontal error ΔS and a height error ΔH;
wherein, when the tilt compensation measurement is performed on a position of the point A, after a RTK measurement software acquires a coordinate of a current position, the horizontal error ΔS and the height error ΔH that change in real-time are displayed on an interface of the RTK measurement software; the RTK collects the compensation points while the ΔS and ΔH are calculated and recorded synchronously by a back end;
when a measurement report is exported, for a section of the tilt compensation measurement in the report, the RTK measurement software synchronously exports the horizontal error ΔS and the height error ΔH, while a maximum horizontal error ΔSmax and a minimum horizontal error ΔSmin of the RTK in the tilt compensation measurement are calculated, simultaneously;
solving a horizontal error mean ∑ΔS and a height error mean ∑ΔH; and
exporting the data and performing a dispersion analysis to output an error statistical diagram.

2. The method for verifying an accuracy of a RTK tilt compensation measurement according to claim 1, **characterized in that**, in the step S2, the control point A is set at an open and unobstructed outdoor position.

3. The method for verifying an accuracy of a RTK tilt compensation measurement according to claim 2, **characterized in that**, in the step S2, the coordinate X0, Y0, H0 of the point A is obtained by calculating an average value of multiple measurements.

4. The method for verifying an accuracy of a RTK tilt compensation measurement according to claim 1, **characterized in that**, the angle α is 5°.

5. The method for verifying an accuracy of a RTK tilt compensation measurement according to claim 1, **characterized in that**, formulas for calculating errors of the tilt compensation measurement comprises:
horizontal error ΔS = ;
height error ΔH=H0-Hn.
